# EUROPEAN PATENT APPLICATION

(11) **EP 4 109 379 A1**
(43) Date of publication of application: **28.12.2022**
(21) Application number: 20919499.2
(22) Date of filing: 20.02.2020
(51) Int. Cl.: G06Q 50/10

(54) **PROCESSING SYSTEM, PROCESSING METHOD, AND PROGRAM**

(71) Applicant: NEC Corporation, 108-8001 Tokyo (JP)
(72) Inventor: ARIYOSHI Masayuki, Tokyo 108-8001 (JP); NOMURA Toshiyuki, Tokyo 108-8001 (JP); TANAKA Toshiaki, Tokyo 108-8001 (JP); MORIBE Takeshi, Tokyo 108-8001 (JP); SUZUKI Tetsuaki, Tokyo 108-8001 (JP); OGURA Kazumine, Tokyo 108-8001 (JP); YAMANOUCHI Shingo, Tokyo 108-8001 (JP); SUMIYA Tatsuya, Tokyo 108-8001 (JP); KHAN Nagma Samreen, Tokyo 108-8001 (JP)
(74) Representative: Betten & Resch
(86) International application number: PCT/JP2020/006753
(87) International publication number: WO 2021/166150

(57) **Abstract**

The present invention provides a processing system (10) including: an electromagnetic wave reception unit (11) that receives an electromagnetic wave from a target person passing through a predetermined region; a determination unit (12) that determines, based on a signal of the received electromagnetic wave, whether the target person carries a previously-specified object; a route decision unit (13) that decides, based on a result of the determination, an inspection route where the target person proceeds from among a plurality of the previously-determined inspection routes; and a guidance unit (14) that executes guidance processing of guiding the target person to the decided inspection route.

## Description

### [Technical Field]

The present invention relates to a processing system, a processing method, and a program.

### [Background Art]

An urban crime, a terror threat, and the like are increasing, and therefore, importance for security enhancement in a facility where people gather is increasing.

Non-Patent Document 1 discloses that, for security enhancement, a suspicious person is tracked based on marking, a suspicious object is detected by a microwave radar, a person is identified based on face authentication, a belongings inspection is performed based on a transmission image, and the like.

Patent Document 1 discloses that a belongings inspection for a passenger is performed by using various types of techniques such as a metal detector, or an X-ray image, opening/closing of a gate is controlled according to an inspection result, and thereby a movement direction of a passenger is controlled, and the like.

Patent Document 2 discloses that, when an intruder is detected by a milliwave sensor, a line of sight of a surveillance camera is directed to a detection location of the intruder, and thereby a zoom image of the intruder is acquired, and the like.

Patent Document 3 discloses that a three-dimensional image is generated by using a microwave signal, and thereby a baggage inspection is performed.

### [Related Document]

### [Patent Document]

[Patent Document 1] Japanese Patent Application Publication (Translation of PCT Application) No. 2017-537399
[Patent Document 2] Japanese Patent Application Publication No. 2005-45712
[Patent Document 3] Japanese Patent Application Publication (Translation of PCT Application) No. 2017-508949

### [Non-Patent Document]

[Non-Patent Document 1] "Prescription for Causing "Advanced Airport Security" to Widely Take Root in our Country - Future-Image Study Group of Airport Security Investigation Report Digest Version", [online], July 18, 2017, Future-Image Study Group of Airport Security, [retrieved on September 18, 2019], the Intemet<URL: https://www.nttdata-strategy.com/aboutus/newsrelease/170718/report.pdf>

### [Disclosure of the Invention]

### [Technical Problem]

An issue according to the present invention is to improve processing efficiency for a belongings inspection.

### [Solution to Problem]

According to the present invention,
provided is a processing system including:
an electromagnetic wave reception means for receiving an electromagnetic wave from a target person passing through a predetermined region;
a determination means for determining, based on a signal of the received electromagnetic wave, whether the target person carries a previously-specified object;
a route decision means for deciding, based on a result of the determination, an inspection route where the target person proceeds from among a plurality of the previously-determined inspection routes; and
a guidance means for executing guidance processing of guiding the target person to the decided inspection route.

Further, according to the present invention,
provided is a processing method including:
by a processing system,
receiving an electromagnetic wave from a target person passing through a predetermined region;
determining, based on a signal of the received electromagnetic wave, whether the target person carries a previously-specified object;
deciding, based on a result of the determination, an inspection route where the target person proceeds from among a plurality of the previously-determined inspection routes; and
executing guidance processing of guiding the target person to the decided inspection route.

Further, according to the present invention,
provided is a program causing a computer to function as:
an electromagnetic wave reception means for receiving an electromagnetic wave from a target person passing through a predetermined region;
a determination means for determining, based on a signal of the received electromagnetic wave, whether the target person carries a previously-specified object;
a route decision means for deciding, based on a result of the determination, an inspection route where the target person proceeds from among a plurality of the previously-determined inspection routes; and
a guidance means for executing guidance processing of guiding the target person to the decided inspection route.

### [Advantageous Effects of Invention]

According to the present invention, processing efficiency for a belongings inspection is improved.

### [Brief Description of the Drawings]

[Fig. 1] Fig. 1 is a conceptual diagram for illustrating a whole image of a processing system according to the present example embodiment.
[Fig. 2] Fig. 2 is a diagram illustrating one example of a hardware configuration of the processing system according to the present example embodiment.
[Fig. 3] Fig. 3 is one example of a function block diagram of the processing system according to the present example embodiment.
[Fig. 4] Fig. 4 is a diagram illustrating a disposition example of a sensor panel.
[Fig. 5] Fig. 5 is a diagram illustrating a disposition example of a sensor panel.
[Fig. 6] Fig. 6 is a diagram illustrating a disposition example of a sensor panel.
[Fig. 7] Fig. 7 is a diagram illustrating a disposition example of a sensor panel.
[Fig. 8] Fig. 8 is a diagram illustrating a disposition example of a sensor panel.
[Fig. 9] Fig. 9 is a diagram illustrating a disposition example of a sensor panel.
[Fig. 10] Fig. 10 is a flowchart illustrating one example of a flow of processing of the processing system according to the present example embodiment.
[Fig. 11] Fig. 11 is a conceptual diagram for illustrating a whole image of the processing system according to the present example embodiment.
[Fig. 12] Fig. 12 is a flowchart illustrating one example of a flow of processing of the processing system according to the present example embodiment.
[Fig. 13] Fig. 13 is a flowchart illustrating one example of a flow of processing of the processing system according to the present example embodiment.
[Fig. 14] Fig. 14 is a conceptual diagram for illustrating a whole image of the processing system according to the present example embodiment.
[Fig. 15] Fig. 15 is a conceptual diagram for illustrating a comparison example.
[Fig. 16] Fig. 16 is a conceptual diagram for illustrating a whole image of the processing system according to the present example embodiment.
[Fig. 17] Fig. 17 is a function block diagram for illustrating the processing system according to the present example embodiment.
[Fig. 18] Fig. 18 is a diagram schematically illustrating one example of information processed by the processing system according to the present example embodiment.

### [Description of Embodiments]

### <First Example Embodiment

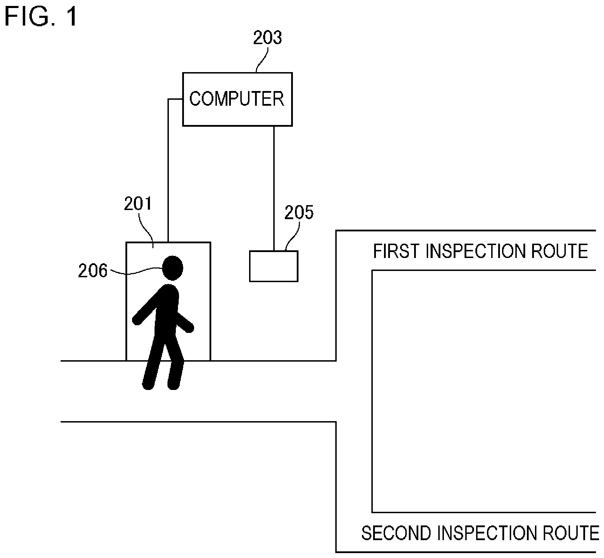

First, by using Fig. 1, an outline of a processing system according to the present example embodiment is described. The processing system according to the present example embodiment is used in a scene requiring a belongings inspection such as an airport, a building, and an event site.

A belongings inspection according to the present example embodiment is divided into a plurality of inspection routes. A plurality of inspection routes are different from each other in a manner, a content, and the like in inspection. A plurality of inspection routes may be divided, for example, into an inspection route where detailed inspection is performed and an inspection route where simple inspection is performed, or may be divided into other inspection routes. Note that, in an example in Fig. 1, division is made into two inspection routes, but division may be made into three or more inspection routes.

A sensor panel 201 receives an electromagnetic wave from a target person 206 (including belongings) passing through a front of the sensor panel 201. Specifically, the sensor panel 201 irradiates the target person 206 with an electromagnetic wave and receives a reflection wave of the irradiated wave. A computer 203 determines, based on a signal of the reflection wave received in the sensor panel 201, whether the target person 206 carries a previously-specified prohibited object. Then, the computer 203 decided, based on a result of the determination, an inspection route where the targe person 206 proceeds from among a plurality of previously-determined inspection routes, and notifies the target person 206 of a decision content, for example, via a display 205. The target person 206 proceeds to the notified inspection route and undergoes a belongings inspection in the route.

In this manner, according to the present example embodiment, a plurality of inspection routes different from each other in a manner, a content, and the like in inspection are prepared, and inspection is performed based on a method suitable for each of target persons 206. Thereby, inconvenience such as a matter that detailed inspection is performed unnecessarily for the target person 206 being unsuspicious about prohibited object carrying and a matter that simple inspection is performed for the target person 206 being suspicious about prohibited object carrying and prohibited object carrying is overlooked can be reduced.

Then, according to the present example embodiment, in any one of a plurality of inspection routes, before a belongings inspection for the target person 206 is performed, a preliminary belongings inspection using the sensor panel 201 and the computer 203 is performed. Then, based on a result of the preliminary belongings inspection, it is decided in which one of the plurality of inspection routes a belongings inspection is performed for the target person 206, and thereby, the target person 206 is guided to the decided inspection route. Each target person 206 can be guided to an appropriate inspection route, based on a result of the preliminary belongings inspection, and therefore processing efficiency can be increased while detection accuracy of prohibited object carrying is maintained at a sufficient level.

Next, a configuration of the processing system is described in detail. First, one example of a hardware configuration of the processing system is described. Each function unit included in the processing system is achieved based on any combination of hardware and software mainly including a central processing unit (CPU) of any computer, a memory, a program loaded onto a memory, a storage unit (capable of storing, in addition to a program previously stored from a stage where an apparatus is shipped, a program downloaded from a storage medium such as a compact disc (CD), a server on the Internet, and the like) such as a hard disk storing the program, and a network-connection interface. Then, it should be understood by those of ordinary skill in the art that, in an achievement method and an apparatus for the above, there are various modified examples.

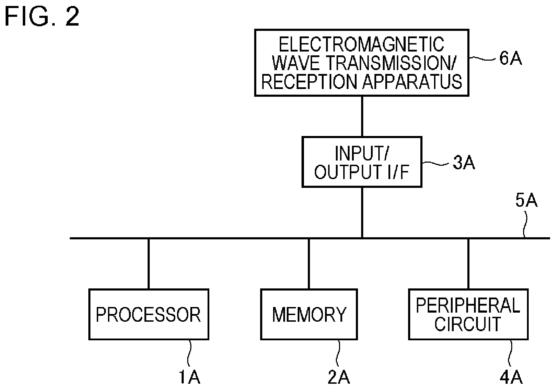

Fig. 2 is a block diagram illustrating a hardware configuration of the processing system. As illustrated in Fig. 2, the processing system includes a processor 1A, a memory 2A, an input/output interface 3A, a peripheral circuit 4A, a bus 5A, and an electromagnetic wave transmission/reception apparatus 6A. The peripheral circuit 4A includes various modules. The processing system may not necessarily include the peripheral circuit 4A. Note that, the processing system may be configured by a plurality of apparatuses physically and/or logically separated, or may be configured by one apparatus physically and/or logically integrated. When the processing system is configured by a plurality of apparatuses physically and/or logically separated, each of the plurality of apparatuses may include the above-described hardware configuration.

The bus 5A is a data transmission path through which the processor 1A, the memory 2A, the peripheral circuit 4A, and the input/output interface 3A mutually transmit/receive data. The processor 1A is an arithmetic processing apparatus, for example, such as a CPU, and a graphics processing unit (GPU). The memory 2A is a memory, for example, such as a random access memory (RAM), and a read only memory (ROM). The input/output interface 3A includes an interface for acquiring information from an input apparatus, an external apparatus, an external server, an external sensor, a camera, and the like, an interface for outputting information to an output apparatus, an external apparatus, an external server, and the like. As one example of the external sensor, the electromagnetic wave transmission/reception apparatus 6A is illustrated. The electromagnetic wave transmission/reception apparatus 6A includes a transmission antenna for transmitting an electromagnetic wave and a reception antenna for receiving an electromagnetic wave. The electromagnetic wave transmission/reception apparatus 6A is, for example, a radar. The input apparatus is, for example, a keyboard, a mouse, a microphone, a physical button, a touch panel, or the like. The output apparatus is, for example, a display, a speaker, a printer, a mailer, or the like. The processor 1A can issue an instruction to each module, and perform an arithmetic operation, based on arithmetic operation results of the module.

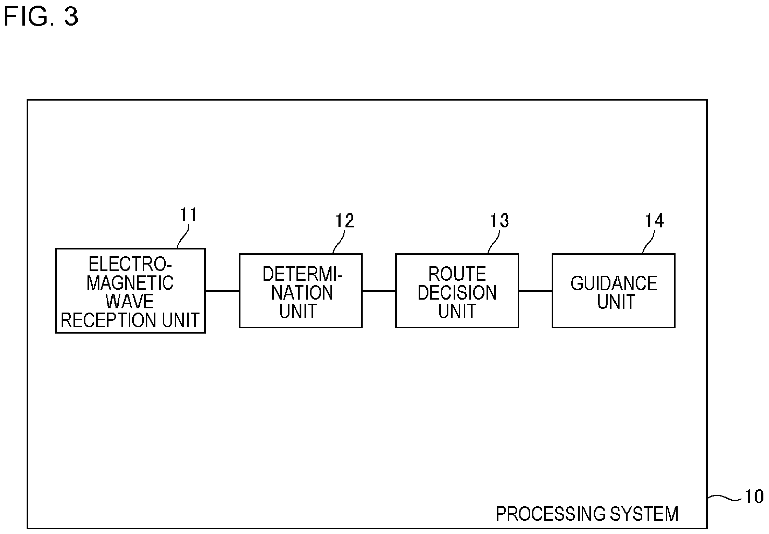

Next, a function configuration of the processing system is described. As illustrated in a function block diagram in Fig. 3, a processing system 10 includes an electromagnetic wave reception unit 11, a determination unit 12, a route decision unit 13, and a guidance unit 14.

The electromagnetic wave reception unit 11 receives an electromagnetic wave from a target person 206 (including belongings) passing through a predetermined region (hereinafter, referred to as an "electromagnetic wave irradiation region" in some cases). Specifically, the electromagnetic wave reception unit 11 irradiates the target person 206 passing through an electromagnetic wave irradiation region with an electromagnetic wave (e.g., a microwave, a milliwave, a terahertz wave, or the like) having a wavelength of equal to or more than 30 micrometers and equal to or less than one meter, and receives a reflection wave. The electromagnetic wave irradiation region is, for example, a front of a configuration object (e.g., a sensor panel) for achieving the electromagnetic wave reception unit 11.

The electromagnetic wave reception unit 11 is, for example, a radar. The electromagnetic wave reception unit 11 may be a sensor panel configured by a radar in which a plurality of transmission antennas and a plurality of reception antennas are arranged. Note that, one sensor panel is employable as illustrated in Fig. 1, or a plurality of sensor panels are employable. For example, two sensor panels may be installed oppositely to each other. Further, a sensor panel may be disposed, for example, in such a way as to have a predetermined angle with respect to a movement direction of the target person 206. Further, a sensor panel may be embedded in a wall or the like in such a way that the target person 206 is prohibited from recognizing presence of the sensor panel.

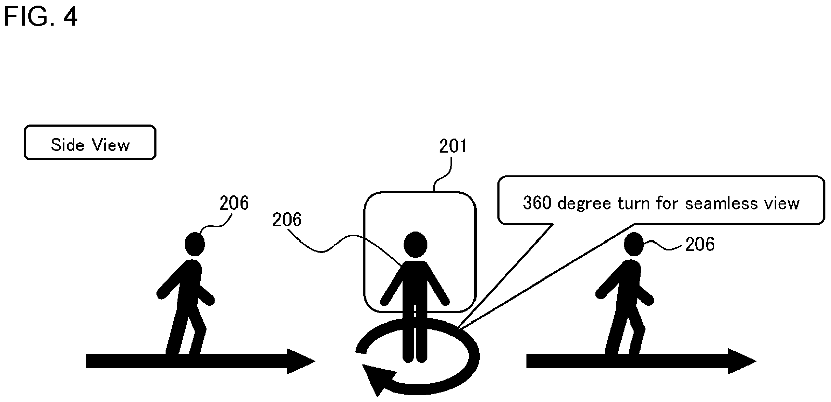

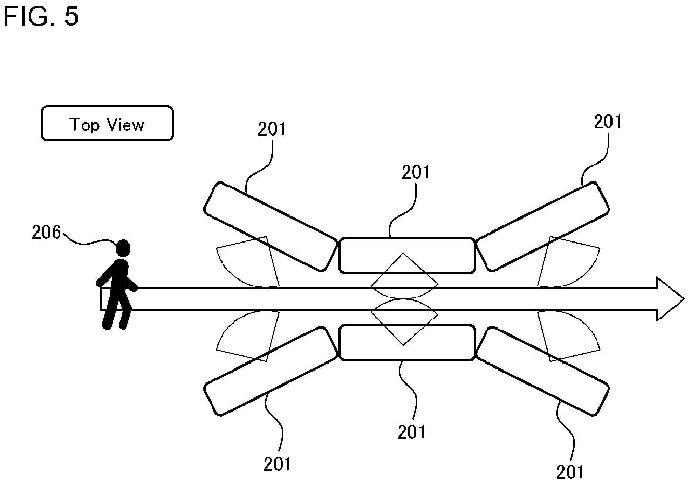

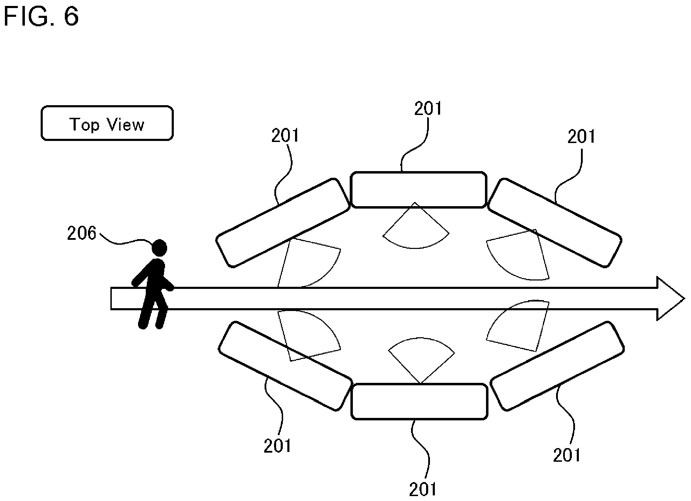

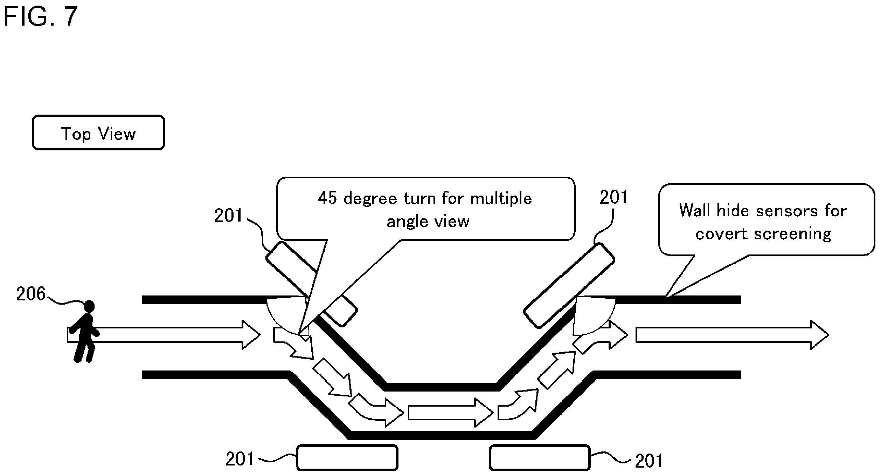

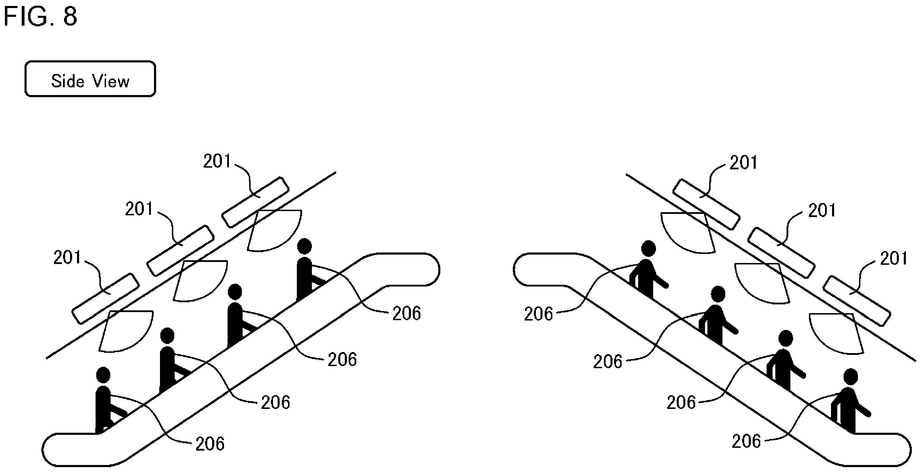

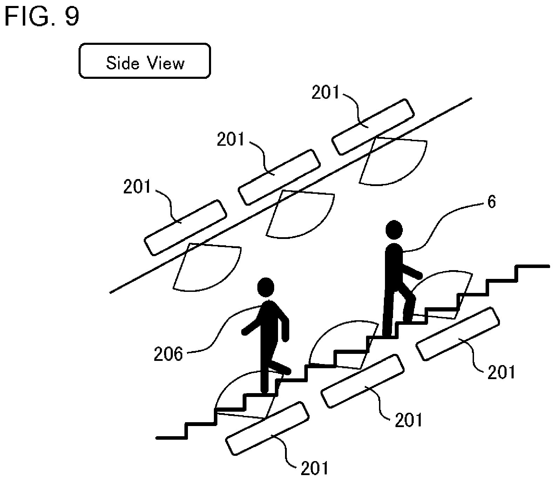

Figs. 4 to 9 each illustrate one example of a disposition method for a sensor panel. In an example in Fig. 4, one sensor panel 201 is disposed, and in front of the sensor panel 201, the target person 206 is requested to rotate. Note that, without rotation in front of the sensor panel 201, complete walkthrough-type inspection is employable. In examples in Figs. 5 and 6, a plurality of sensor panels 201 are disposed in such a way as to sandwich a location through which the target person 206 passes. In an example in Fig. 7, due to a direction change, a plurality of sensor panels 201 are disposed in a curved location of a passage where the target person 206 rotates by a predetermined angle. Fig. 8 is an example in which, on an upper side of an escalator, stairs, and the like, a sensor panel 201 is disposed. The sensor panel 201 can be installed, for example, on a backside of a ceiling having an angle with respect to a horizontal direction as illustrated. Fig. 9 is an example in which a sensor panel 201 is installed on an upper side and a lower side of an elevator, stairs, and the like. The sensor panel 201 can be installed, for example, on a backside of a ceiling having an angle with respect to a horizontal direction as illustrated.

Referring back to Fig. 3, the determination unit 12 determines, based on a signal of a reflection wave received by the electromagnetic wave reception unit 11, whether a target person 206 carries a previously-specified prohibited object. Note that, "specifying a prohibited object" is, for example, specifying a category (type) such as a "gun", a "knife, "scissors", and the like, and it is unnecessary to specify a detailed type, a detailed model, or the like of each category. According to a determination method using machine learning to be described later, for example, even an unknown type or model in a specified prohibited object can be detected. Hereinafter, one example of a determination method based on the determination unit 12 is described, but is merely one example without limitation.

The determination unit 12 may generate a transmission image, for example, based on a signal of a reflection wave received by the electromagnetic wave reception unit 11. Then, the determination unit 12 may determine, based on an object shape captured in the transmission image, whether the target person 206 carries a previously-specified prohibited object.

As one example of a determination method based on an object shape captured in a transmission image, use of machine learning is conceivable. An estimation model in which, for example, a transmission image (training data) of a previously-specified prohibited object is prepared and a prohibited object captured in a transmission image is estimated by machine learning based on the training data may be generated. Then, the determination unit 12 may determine, based on the generated transmission image and the estimation model, whether a previously-specified prohibited object is captured in the transmission image. As another example, the determination unit 12 may search, based on template matching using a template indicating a shape of a previously-specified prohibited object, a previously specified prohibited object in a transmission image.

Further, the determination unit 12 may determine, based on a feature value captured in a signal of a reflection wave received by the electromagnetic wave reception unit 11, whether the target person 206 carries a previously-specified prohibited object. In other words, the determination unit 12 may execute the determination by directly using, without generating a transmission image, a signal of a reflection wave. Also, in this case, use of an example using an estimation model based on the above-described machine learning or an example using template matching is conceivable.

A previously-specified prohibited object is an object undesirably carried by the target person 206, and a dangerous object, for example, such as a knife, a gun, and scissors is exemplified without limitation.

Note that, when the electromagnetic wave reception unit 11 continuously transmits/receives an electromagnetic wave, the determination unit 12 can classify a signal of a reflection wave with respect to each target person 206, and determine, based on a signal of a reflection wave of each target person 206, whether each target person 206 carries a previously-specified prohibited object.

Examples of processing of classifying a signal of a reflection wave with respect to each target person 206 are conceivable as described below. First, in a case where the target person 206 is present in an electromagnetic wave irradiation region and in a case where the target person 206 is not present, a signal of a reflection wave and a feature captured in a transmission image generated from the signal are different from the cases. When the target person 206 is not present in an electromagnetic wave irradiation region, a reflection wave reflected, for example, by an opposite wall is received by the electromagnetic wave reception unit 11, but when the target person 206 is present in an electromagnetic wave irradiation region, a reflection wave reflected, for example, by a wall and the person target person 206 is received by the electromagnetic wave reception unit 11.

In a state where, for example, any person is not present in an electromagnetic wave irradiation region, an electromagnetic wave is previously transmitted/received by the electromagnetic wave reception unit 11, and a signal of a reflection signal received in this state may be stored as a reference signal. Then, the determination unit 12 may determine, by using the reference signal or a transmission image generated from the reference signal, which either of "a state where the target person 206 is present in an electromagnetic wave irradiation region" and "a state where the target person 206 is not present in an electromagnetic wave irradiation region" a signal of a reflection wave received by the electromagnetic wave reception unit 11 indicates. The determination unit 12 may determine either of the two states, for example, based on whether a difference between a signal of a reflection wave and a reference signal is equal to or more than a threshold, or whether a difference between a transmission image generated from a signal of a reflection wave and a transmission image generated from a reference signal is equal to or more than a threshold.

In addition, by using an optical image generated by an apparatus (a sensor such as a camera) other than the above-described apparatus or sensor information of a human sensor or the like, entrance/exit of the target person 206 to/from an electromagnetic wave irradiation region is determined, and thereby a "timing (period of time) at which each target person 206 is present in the electromagnetic wave irradiation region" may be determined. Then, based on the determined "timing (period of time) at which each target person 206 is present in the electromagnetic wave irradiation region", a signal of a reflection wave may be classified with respect to each target person 206.

The determination unit 12 can determine, based on the determination result, a timing at which each target person 206 enters an electromagnetic wave irradiation region (a timing at which a state where the target person 206 is not present in an electromagnetic wave irradiation region is changed to a state where the target person 206 is present in the electromagnetic wave irradiation region) and a timing at which each target person 206 exits from an electromagnetic wave irradiation region (a timing at which a state where the target person 206 is present in an electromagnetic wave irradiation region is changed to a state where the target person 206 is not present in the electromagnetic wave irradiation region). Then, the determination unit 12 can classify, based on the determination result, a signal of a reflection wave with respect to each target person 206. Specifically, a signal of a reflection wave ranging from "a timing at which a certain target person 206 enters an electromagnetic wave irradiation region" to "a timing at which a certain target person 206 exits from the electromagnetic wave irradiation region" immediately after the former timing, can be handled as data of one target person 206.

The route decision unit 13 decides, based on a determination result based on the determination unit 12, an inspection route where a target person 206 proceeds from among a plurality of previously-determined inspection routes. For example, an inspection route (e.g., a first inspection route) decided when the determination unit 12 determines that a prohibited object is carried, and an inspection route (e.g., a second inspection route) decided when the determination unit 12 determines that a prohibited object is not carried are previously decided, and a content of the above may be registered in the processing system 10. Then, the route decision unit 13 may decide, based on the registration content and a determination result based on the determination unit 12, an inspection route where the target person 206 proceeds. According to the present example embodiment, details of each of a plurality of inspection routes are not specifically limited. According to the following example embodiments, one example of details of each of a plurality of inspection routes is described.

The guidance unit 14 executes guidance processing of guiding a target person 206 to an inspection route decided by the route decision unit 13.

The guidance processing may be processing of notifying the target person 206 of an inspection route decided by the route decision unit 13, via a display and a speaker installed in a location viewable by the target person 206.

In addition, the guidance processing may be processing of lighting, from among a plurality of lamps each installed relevantly to each of a plurality of inspection routes, a lamp relevant to an inspection route decided by the route decision unit 13.

In addition, the guidance processing may be processing of opening, from among a plurality of gates each installed relevantly to each of a plurality of inspection routes, a gate relevant to an inspection route decided by the route decision unit 13, or may be processing of closing a gate relevant to another inspection route.

In addition, the guidance processing may be processing of notifying a person in charge of guidance of an inspection route decided by the route decision unit 13, via a mobile terminal carried by the person in charge of guidance guiding the target person 206 to any one of a plurality of inspection routes, or a display or a speaker installed viewable by the person in charge of guidance.

Note that, the guidance processing exemplified herein is merely one example, and based on another method, the target person 206 may be guided to an inspection route decided by the route decision unit 13.

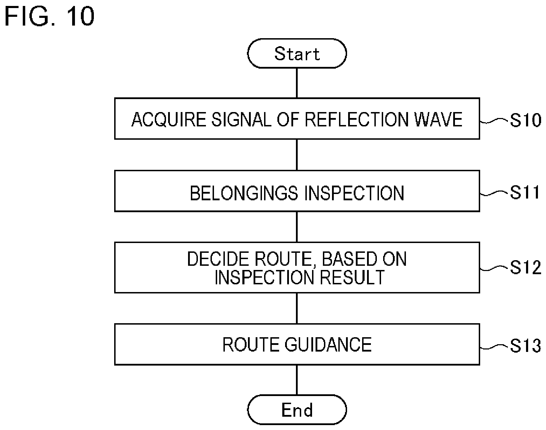

Next, by using a flowchart in Fig. 10, one example of a flow of processing of the processing system 10 is described.

Processing starts, and then the electromagnetic wave reception unit 11 repeats irradiation of an electromagnetic wave having a wavelength of equal to or more than 30 micrometers and equal to or less than one meter and reception of a reflection wave. Then, the determination unit 12 performs, when acquiring a signal of a reflection wave from the electromagnetic wave reception unit 11 (S10), a preliminary belongings inspection for a target person 206, based on the signal (S11). Specifically, the determination unit 12 determines, based on a signal of a reflection wave, whether the target person 206 enters an electromagnetic wave irradiation region. Then, the determination unit 12 determines, when determining that the target person 206 enters the electromagnetic wave irradiation region, whether the target person 206 carries a previously-specified prohibited object, based on the signal of the reflection signal.

Next, the route decision unit 13 decides, based on a determination result of the determination unit 12, an inspection route where the target person 206 proceeds from among a plurality of previously-determined inspection routes (S12). Then, the guidance unit 14 executes guidance processing of guiding the target person 206 to the decided inspection route (S13).

According to the present example embodiment described above, a plurality of inspection routes different from each other in a manner, a content, and the like of inspection are prepared, and inspection is performed based on a method suitable for each of target persons 206. Thereby, inconvenience such as a matter that detailed inspection is performed unnecessarily for the target person 206 being unsuspicious about prohibited object carrying and a matter that simple inspection is performed for the target person 206 being suspicious about prohibited object carrying and prohibited object carrying is overlooked can be reduced.

Then, according to the present example embodiment, in any one of a plurality of inspection routes, before a belongings inspection for the target person 206 is performed, a preliminary belongings inspection using the processing system 10 is performed. Then, based on a result of the preliminary belongings inspection, it is decided in which one of the plurality of inspection routes a belongings inspection is performed for the target person 206, and thereby, the target person 206 is guided to the decided inspection route. Each target person 206 can be guided to an appropriate inspection route, based on a result of the preliminary belongings inspection, and therefore processing efficiency can be increased while detection accuracy of prohibited object carrying is maintained at a sufficient level.

Further, according to the processing system 10 of the present example embodiment, a preliminary belongings inspection before a belongings inspection can be changed to walkthrough-type inspection. Therefore, deterioration of processing efficiency due to introduction of the preliminary belongings inspection before the belongings inspection can be avoided.

### <Second Example Embodiment

According to the first example embodiment, a preliminary belongings inspection is performed immediately before a target person 206 is guided to any one of a plurality of inspection routes, and immediately after the preliminary belongings inspection, based on a result of the inspection, the target person 206 is guided to a predetermined inspection route.

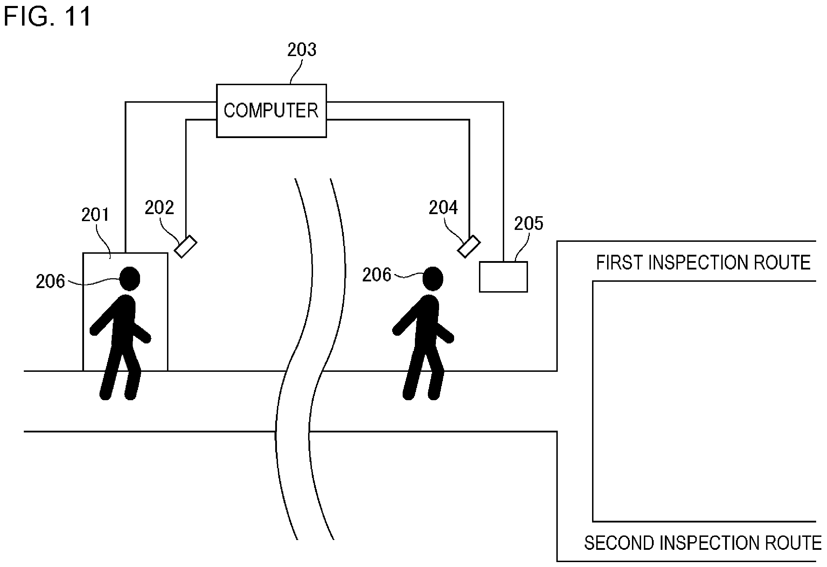

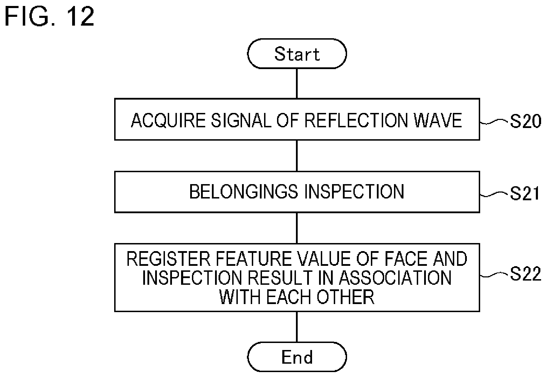

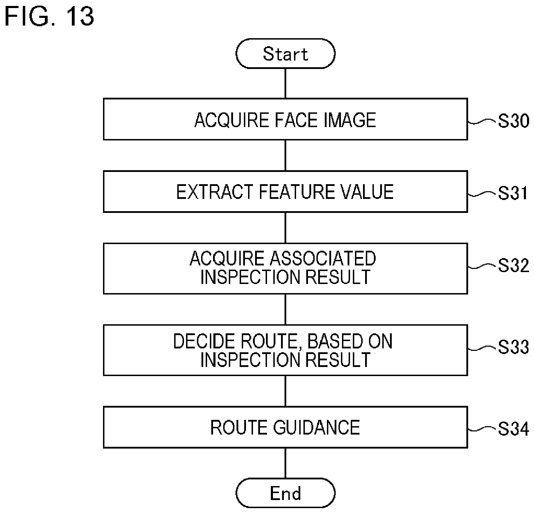

In contrast, a processing system 10 according to the present example embodiment performs a preliminary belongings inspection at any timing before an elephant target person 206 is guided to any one of a plurality of inspection routes, and registers a result of the inspection. Then, the processing system 10 reads, when guiding the target person 206 to any one of a plurality of inspection routes, a registered result of the preliminary belongings inspection, and guides, based on the read result, the target person 206 to a predetermined inspection route. Hereinafter, by using a conceptual diagram in Fig. 11 and flowcharts in Figs. 12 and 13, a configuration of the processing system 10 is described.

First, at any timing before a target person 206 is guided to any one of a plurality of inspection routes, a sensor panel 201 irradiates the target person 206 with an electromagnetic wave and receives a reflection wave (S20 in Fig. 12). An installation location of the sensor panel 201 may be an entrance of a facility, may be a passage, or may be another place. Then, the processing system 10 determines, based on a signal of the reflection wave received by the sensor panel 201, whether the target person 206 carries a previously-specified prohibited object (S21 in Fig. 12).

Further, the processing system 10 captures an image of the target person 206 by using a camera 202 at any timing immediately before passage, during passage, or immediately after passage through a front of the sensor panel 201. Then, the processing system 10 registers a result of a preliminary belongings inspection for the target person 206 based on the signal of the reflection wave received by the sensor panel 201 and a feature value of an appearance (a feature value of a face or the like) extracted from the captured image of the target person 206 in association with each other (S22 in Fig. 12).

Then, the processing system 10 captures, when the target person 206 comes to a belongings inspection site, an image of the target person 206 by using the camera 204 before guidance to a predetermined inspection route (S30 in Fig. 13). Then, the processing system 10 extracts, after extracting a feature value of an appearance of the target person 206 from the capture image (S31 in Fig. 13), a result of inspection associated with the feature value of the appearance extracted in S31 from the result of the preliminary belongings inspection registered in S22 (S32 in Fig. 13). Then, the processing system 10 decides, based on the extracted result, an inspection route where the target person 206 is guided (S33 in Fig. 13), and notifies the target person 206 of the decided inspection route, for example, via a display 205 (S34 in Fig. 13).

Other configurations of the processing system 10 according to the present example embodiment are similar to the processing system 10 according to the first example embodiment.

According to the processing system 10 of the present example embodiment described above, an advantageous effect similar to the processing system 10 according to the first example embodiment is achieved. Further, an installation location of the sensor panel 201 is not limited, and therefore convenience is increased.

Herein, a modified example according to the present example embodiment is described. First, the processing system 10 acquires customer identification information of a target person 206 subjected to a preliminary belongings inspection, and stores a result of the preliminary belongings inspection in association with the customer identification information. Customer identification information of the target person 206 may be customer identification information of any service, an individual number, a passport number, or the like, or may be another item.

Herein, one example of a means for acquiring, by the processing system 10, customer identification information of the target person 206 in a preliminary belongings inspection is described. The processing system 10 may acquire, for example, customer identification information of the target person 206, based on collation processing using "an image of the target person 206 whose image is captured at any timing immediately before passage, during passage, or immediately after passage through a front of a sensor panel 201" and "a database associating a previously-generated feature value of an appearance of each of a plurality of target persons 206 with customer identification information of the target person 206".

In addition, in a vicinity of the sensor panel 201, an input apparatus to which biological information (fingerprint information, voiceprint information, iris information, or the like) of the target person 206 is input may be disposed. Then, the processing system 10 may acquire customer identification information of the target person 206, based on collation processing using "biological information input via the input apparatus" and "a database associating previously-generated biological information of each of a plurality of target persons 206 with customer identification information of the target person 206".

In addition, in a vicinity of the sensor panel 201, an apparatus that performs short-range radio communication with a mobile device such as a smartphone, a smartwatch, a mobile phone, and an IC card carried by the target person 206 and acquires customer identification information stored in the mobile device, or a code reader that reads a code (a bar code, a two-dimensional code, or the like) indicating customer identification information carried by the target person 206 may be disposed. Then, the processing system 10 may acquire customer identification information input via the apparatus or the code reader.

Then, according to the modified example, instead of a camera 204 in Fig. 11, an apparatus that accepts input of customer identification information is installed. The apparatus may be a camera, a fingerprint sensor, a microphone, or the like that accepts input of the biological information described above. Further, the apparatus may be an apparatus that performs short-range radio communication with a mobile device such as a smartphone, a smartwatch, a mobile phone, and an IC card carried by the target person 206 and acquires customer identification information stored in the mobile device. Further, the apparatus may be a code reader that reads a code (a bar code, a two-dimensional code, or the like) indicating customer identification information carried by the target person 206.

Then, according to the modified example, the processing system 10 accepts, when the target person 206 comes to a belongings inspection site, input of information as described above via the apparatus installed instead of the camera 204 in Fig. 11 before guidance to a predetermined inspection route, and acquires, based on the information, customer identification information of the target person 206. Then, the processing system 10 extracts a result of a preliminary belongings inspection stored in association with the acquired customer identification information, and decides, based on the result, an inspection route where the target person 206 is guided.

Also, according to the modified example, an advantageous effect similar to the present example embodiment is achieved.

### <Third Example Embodiment>

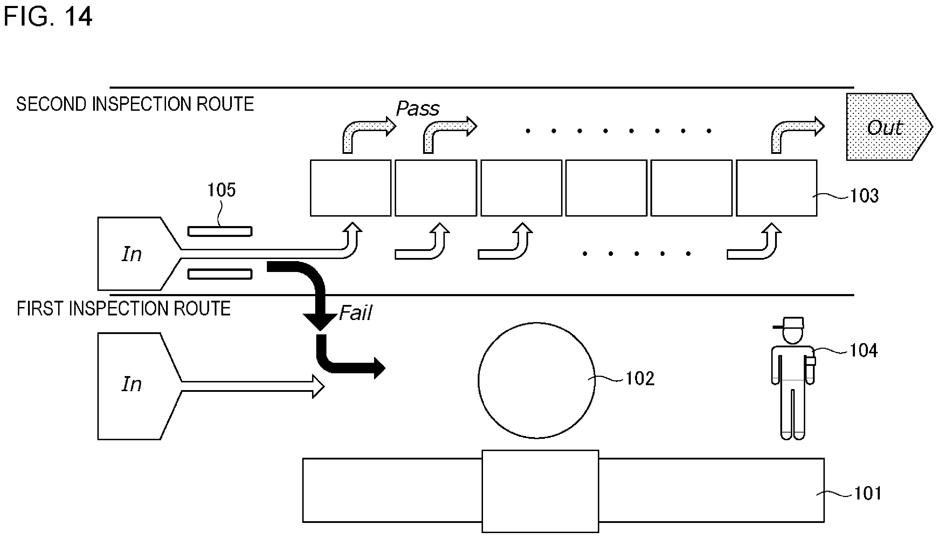

According to the present example embodiment, a plurality of inspection routes are embodied. As illustrated in Fig. 14, an inspection route according to the present example embodiment is divided into a first inspection route and a second inspection route.

In the first inspection route, inspection for belongings and a body of a target person 206 is performed with attendance of an inspector 104. In the first inspection route, more detailed and stricter inspection than in the second inspection route is performed. Inspection, for example, using a belongings inspection apparatus 101 and a body inspection apparatus 102 illustrated in Fig. 14 is performed.

The belongings inspection apparatus 101 irradiates belongings moving on a belt conveyor with an electromagnetic wave such as a microwave, a milliwave, a terahertz wave, and an X-ray, and generates a transmission image, based on a signal of a reflection wave of the irradiated wave. Then, the belongings inspection apparatus 101 outputs the transmission image via an output apparatus such as a display. An inspector 104 views the transmission image, and confirms whether a prohibited object is included in the belongings.

The body inspection apparatus 102 has a space which a target person 206 can enter. The target person 206 enters the body inspection apparatus 102, and holds a predetermined pose. In this state, the body inspection apparatus 102 irradiates the target person 206 with an electromagnetic wave such as a microwave, a milliwave, and a terahertz wave, and generates, based on a signal of a reflection wave of the irradiated wave, a transmission image. Then, the belongings inspection apparatus 101 outputs the transmission image via an output apparatus such as a display. The inspector 104 views the transmission image, and confirms whether the target person 206 carries a prohibited object.

Note that, in the first inspection route, prohibited object detection processing using a metal detector, an odor sensor, or another sensor may be executed.

In the second inspection route, self-inspection for at least either of belongings and a body of the target person 206 is performed without attendance of the inspector 104. Inspection, for example, using a self-inspection apparatus 103 illustrated in Fig. 14 is performed.

For example, a plurality of self-inspection apparatuses 103 as illustrated in Fig. 14 may be provided. Each self-inspection apparatus 103 includes at least either of a self-use belongings inspection apparatus and a self-use body inspection apparatus.

The self-use belongings inspection apparatus is an apparatus that inspects belongings, based on an operation by the target person 206 him/herself. The self-use belongings inspection apparatus includes, for example, a box for accommodating belongings. Then, when the target person 206 accommodates belongings in the box and executes a predetermined operation, the self-use belongings inspection apparatus irradiates the belongings in the box with an electromagnetic wave such as a microwave, a milliwave, a terahertz wave, and an X-ray, and generates a transmission image, based on a signal of a reflection wave of the irradiated wave. Then, the self-use belongings inspection apparatus may determine whether, in the transmission image, a previously-specified prohibited object is captured, and output a determination result. An algorithm for the determination based on the self-use belongings inspection apparatus (a computer) is similar to an algorithm for determination based on the determination unit 12 (a computer) described according to the first example embodiment. Output of a determination result may be, for example, processing of lighting a warning lamp or outputting a warning sound when a prohibited object is detected.

The self-use body inspection apparatus irradiates the target person 206 (the standing target person 206) who operates the self-use belongings inspection apparatus and performs a belongings inspection with an electromagnetic wave such as a microwave, a milliwave, and a terahertz wave, and generates a transmission image, based on a signal of a reflection wave of the irradiated wave. The self-inspection apparatus 103 includes, for example, a space which the target person 206 can enter, and in the space, the box of the self-use belongings inspection apparatus and an antenna for transmitting/receiving an electromagnetic wave may be installed.

Then, the self-use body inspection apparatus determines whether, in the transmission image, a previously-specified prohibited object is captured, and outputs a determination result. An algorithm for the determination based on the self-use body inspection apparatus (a computer) is similar to an algorithm for determination based on the determination unit 12 (a computer) described according to the first example embodiment. Output of a determination result may be, for example, processing of lighting a warning lamp or outputting a warning sound when a prohibited object is detected.

According to the present example embodiment, a target person 206 who has a special qualification capable of receiving favorable treatment in a belongings inspection (e.g., a person who previously pays a predetermined amount of money, a person who previously applies, or the like) stands in a line of the second inspection route. On the other hand, a person who does not have the qualification stands in a line of the first inspection route.

The processing system 10 irradiates an electromagnetic wave and receives a reflection wave at a timing at which a target person 206 standing in the line of the second inspection route passes through a front of a sensor panel 105 (an electromagnetic wave reception unit 11). Then, the processing system 10 performs a preliminary belongings inspection based on a signal of a reflection wave of the irradiated wave. The preliminary belongings inspection is as described according to the first example embodiment.

When, in the preliminary belongings inspection, the determination unit 12 determines that the target person 206 carries a prohibited object, a route decision unit 13 decides the first inspection route as an inspection route where the target person 206 proceeds. On the other hand, when, in the preliminary belongings inspection, the determination unit 12 determines that the target person 206 does not carry a prohibited object, the route decision unit 13 decides the second inspection route as an inspection route where the target person 206 proceeds.

Note that, herein, an example in which a configuration of the processing system 10 according to the first example embodiment is employed has been described, but a configuration of the processing system 10 according to the second example embodiment is employable. In this case, instead of the sensor panel 105 illustrated in Fig. 14, for example, a camera (equivalent to a camera 204 in Fig. 11) for capturing an image of a face of the target person 206 is installed, the target person 206 is determined based on a face image of the target person 206 generated by the camera, a result of a preliminary belongings inspection for the determined target person 206 is thereafter read, and thereby guidance to an appropriate inspection route may be made. In other words, a face feature value is extracted from a face image of the target person 206 captured in the preliminary belongings inspection, and a database associating a result (whether a prohibited object is carried or the like) of the preliminary belongings inspection for the target person 206 with the face feature value is generated. Then, after a face feature value is extracted from a face image of the target person 206 captured by the camera (equivalent to the camera 204 in Fig. 11), the extracted face feature value and a face feature value registered in the database are collated, and thereby a result of the preliminary belongings inspection for the target person 206 is read. Then, based on the read result of the preliminary belongings inspection, the target person 206 is guided to an appropriate inspection route.

Further, a configuration of the modified example described according to the second example embodiment may be operated. In this case, instead of the sensor panel 105 illustrated in Fig. 14, for example, an apparatus such as a camera, a fingerprint sensor, a microphone, a short-range radio communication apparatus, and a code reader is set, customer identification information is acquired based on information input via the apparatus, a result of a preliminary belongings inspection associated with the acquired customer identification information is thereafter read, and thereby guidance to an appropriate inspection route may be made.

Further, herein, an example in which a preliminary belongings inspection is performed only for a target person 206 who has a special qualification capable of receiving favorable treatment in a belongings inspection, and, based on a result of the inspection, division is made into the first inspection route and the second inspection route has been described. As a modified example, a preliminary belongings inspection is performed for all target persons 206, and, based on a result of the inspection, division may be made into the first inspection route and the second inspection route.

Other configurations of the processing system 10 according to the present example embodiment are similar to the first and the second example embodiments.

As described above, according to the processing system 10 of the present example embodiment, an advantageous effect similar to the first and the second example embodiments is achieved.

Further, according to the present example embodiment, as an inspection route, "a first inspection route where detailed and strict inspection for belongings and a body of a target person 206 is performed with attendance of an inspector 104," and "a second inspection route where inspection for at least either of belongings and a body of a target person 206 is performed by him/herself without attendance of an inspector 104" are prepared, and according to a result of a preliminary belongings inspection, the target person 206 can be guided to an appropriate route. Therefore, processing efficiency can be increased while detection accuracy of prohibited object carrying is maintained at a sufficient level.

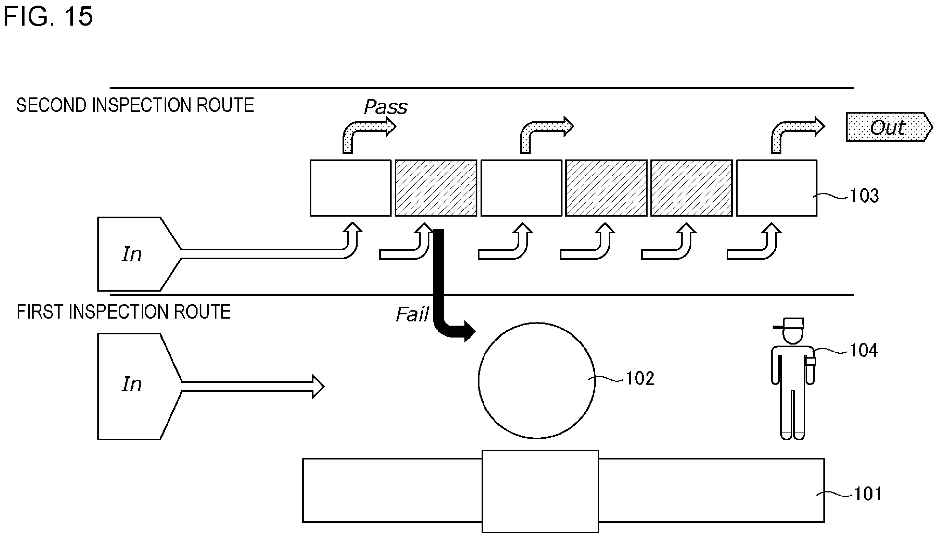

Note that, when the processing system 10 is not employed, for example, in self-inspection in a second inspection route as illustrated in Fig. 15, a person determined as carrying a prohibited object or a person who mistakes or performs with difficulty an operation of self-inspection may appear one after another. In this case, it is necessary for an inspector 104 to cope with an error such as a matter of going to a location of the self-inspection apparatus 103 operated by the target person 206 and conducting predetermined work such as confirmation, or a matter of taking the target person 206 to a first inspection route and performing a detailed and strict belongings inspection using the belongings inspection apparatus 101 and the body inspection apparatus 102. When such a matter of coping with an error frequently occurs, processing efficiency is worsened. When the processing system 10 is employed, such inconvenience can be reduced.

### <Fourth Example Embodiment

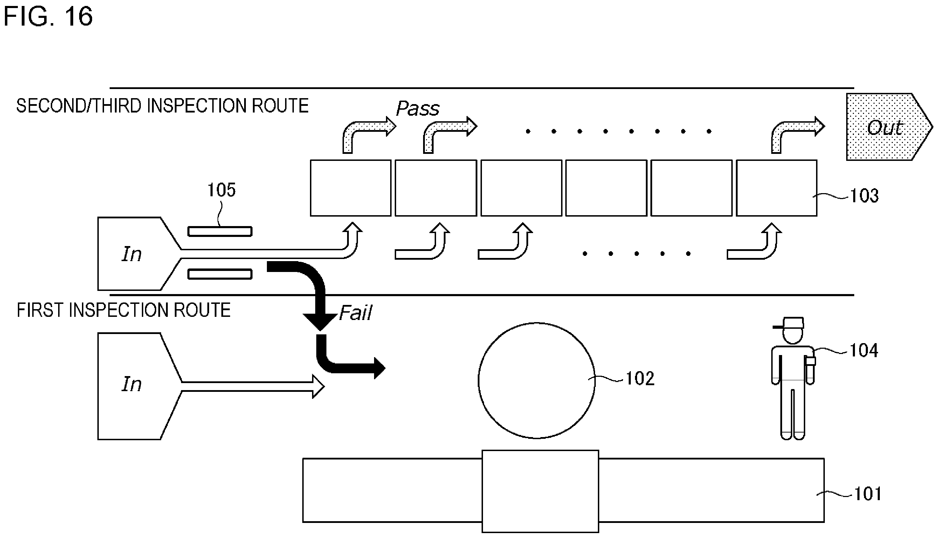

According to the present example embodiment, a plurality of inspection routes are embodied. As illustrated in Fig. 16, an inspection route according to the present example embodiment is divided into a first inspection route, a second inspection route, and a third inspection route.

The first inspection route is the same as the first inspection route described according to the third example embodiment.

In the second inspection route, without attendance of an inspector 104, self-inspection for both of belongings and a body of a target person 206 is performed. For example, inspection using a self-inspection apparatus 103 illustrated in Fig. 14 is performed. A configuration of the self-inspection apparatus 103 is as described according to the third example embodiment.

In the third inspection route, without attendance of an inspector 104, self-inspection for belongings of the target person 206 is performed. In the third inspection route, self-inspection for a body of the target person 206 is not performed. The second inspection route and the third inspection route are different in whether self-inspection for a body is performed. For example, inspection using the self-inspection apparatus 103 illustrated in Fig. 14 is performed.

The self-inspection apparatus 103 used in the third inspection route includes a self-use belongings inspection apparatus described according to the third example embodiment. Then, the self-inspection apparatus 103 used in the third inspection route may include or may not necessarily include a self-use body inspection apparatus described according to the third example embodiment.

When the self-inspection apparatus 103 used in the third inspection route does not include a self-use body inspection apparatus, it is necessary to separately prepare and install the self-inspection apparatus 103 (including a self-use belongings inspection apparatus and a self-use body inspection apparatus) used in the second inspection route and the self-inspection apparatus 103 (including a self-use belongings inspection apparatus and not including a self-use body inspection apparatus) used in the third inspection route.

When the self-inspection apparatus 103 used in the third inspection route includes a self-use body inspection apparatus, the self-inspection apparatus 103 (including a self-use belongings inspection apparatus and a self-use body inspection apparatus) used in the second inspection route and the self-inspection apparatus 103 (including a self-use belongings inspection apparatus and a self-use body inspection apparatus) used in the third inspection route includes the same configuration, and therefore it is unnecessary to separately prepare these self-inspection apparatuses.

In this case, the self-inspection apparatus 103 receives, from a route decision unit 13 or a guidance unit 14, information indicating which either of the second inspection route and the third inspection route an inspection route of the target person 206 is. Then, the self-inspection apparatus 103 decides, based on a content of the information, whether to perform body inspection based on a self-use body inspection apparatus (determines whether to transmit/receive an electromagnetic wave, generate a transmission image, and be relevant to prohibited object carrying).

The guidance unit 14, for example, specifies any one of a plurality of self-inspection apparatus 103, and guides the target person 206 in such a way as to be subjected to self-inspection by using the specified self-inspection apparatus 103. Various manners for guidance are available and, for example, information (e.g., a serial number or the like) identifying the self-inspection apparatus 103 for guidance may be notified to the target person 206 via an output apparatus such as a display. Then, a processing system 10 may transmit, to the self-inspection apparatus 103 having guided the target person 206, information indicating an inspection route (the second inspection route or the third inspection route) of the target person 206.

According to the present example embodiment, a target person 206 who has a special qualification capable of receiving favorable treatment in a belongings inspection (e.g., a person who previously pays a predetermined amount of money, a person who previously applies, and the like) stands in a line of the second/third inspection route. On the other hand, a person who does not have the qualification stands in a line of the first inspection route.

The processing system 10 irradiates an electromagnetic wave and receives a reflection wave at a timing at which a target person 206 standing in the line of the second/third inspection routes passes through a front of a sensor panel 105 (the electromagnetic wave reception unit 11). Then, the processing system 10 performs a preliminary belongings inspection based on a signal of a reflection wave of the irradiated wave. The preliminary belongings inspection is as described according to the first example embodiment.

When, in the preliminary belongings inspection, a determination unit 12 determines that the target person 206 carries a prohibited object, the route decision unit 13 decides the first inspection route as an inspection route where the target person 206 proceeds. On the other hand, when, in the preliminary belongings inspection, the determination unit 12 determines that the target person 206 does not carry a prohibited object, the route decision unit 13 decides the second inspection route or the third inspection route as an inspection route where the target person 206 proceeds.

Herein, a method of deciding either of the second inspection route and the third inspection route is described.

When it is determined whether a prohibited object is carried, based on a signal of a reflection wave, by using a method (machine learning, template matching, or the like) described according to the first example embodiment, for example, a degree of similarity between a feature value of belongings included in a signal to be processed and a feature value of a previously-registered prohibited object is computed, and when the degree of similarity is equal to or more than a first reference value, the belongings are determined as a prohibited object.

Therefore, the route decision unit 13 may decide, when, for example, the degree of similarity is less than the first reference value but is equal to or more than a second reference value (being smaller than the first reference value), the second inspection route as an inspection route where the target person 206 proceeds. Then, the route decision unit 13 may decide, when, for example, the degree of similarity is less than the second reference value, the third inspection route as an inspection route where the target person 206 proceeds.

Further, while detailed description is made according to the following example embodiments, the route decision unit 13 can decide an inspection route where the target person 206 proceeds, by using, in addition to a determination result of a preliminary belongings inspection based on the determination unit 12, another piece of information. In this case, the route decision unit 13 can decide, based on a wide variety of pieces of information, an appropriate route between the second inspection route and the third inspection route as an inspection route where the target person 206 proceeds.

Note that, herein, an example in which a configuration of the processing system 10 according to the first example embodiment is employed has been described, but a configuration of the processing system 10 according to the second example embodiment is employable. In this case, instead of a sensor panel 105 illustrated in Fig. 14, for example, a camera (equivalent to a camera 204 in Fig. 11) for capturing an image of a face of the target person 206 is installed, the target person 206 is determined based on a face image of the target person 206 generated by the camera, a result of a preliminary belongings inspection for the determined target person 206 is thereafter read, and thereby guidance to an appropriate inspection route may be made. In other words, a face feature value is extracted from a face image of the target person 206 captured in the preliminary belongings inspection, and a database associating a result (whether a prohibited object is carried or the like) of the preliminary belongings inspection for the target person 206 with the face feature value is generated. Then, after a face feature value is extracted from a face image of the target person 206 captured by the camera (equivalent to the camera 204 in Fig.11), the extracted face feature value and a face feature value registered in the database are collated, and thereby a result of the preliminary belongings inspection for the target person 206 is read. Then, based on the read result of the preliminary belongings inspection, the target person 206 is guided to an appropriate route.

Further, a configuration of the modified example described according to the second example embodiment may be operated. In this case, instead of the sensor panel 105 illustrated in Fig. 14, for example, an apparatus such as a camera, a fingerprint sensor, a microphone, a short-range radio communication apparatus, and a code reader is set, customer identification information is acquired based on information input via the apparatus, a result of a preliminary belongings inspection associated with the acquired customer identification information is thereafter read, and thereby guidance to an appropriate inspection route may be made.

Further, herein, an example in which a preliminary belongings inspection is performed only for a target person 206 who has a special qualification capable of receiving favorable treatment in a belongings inspection, and, based on a result of the inspection, division is made into the first inspection route, the second inspection route, and the third inspection route has been described. As a modified example, a preliminary belongings inspection is performed for all target persons 206, and, based on a result of the inspection, division may be made into the first inspection route, the second inspection route, and the third inspection route.

Other configurations of the processing system 10 according to the present example embodiment are similar to the first and the second example embodiments.

As described above, according to the processing system 10 of the present example embodiment, an advantageous effect similar to the first and the second example embodiments is achieved.

Further, according to the present example embodiment, as an inspection route, "a first inspection route where detailed and strict inspection for belongings and a body of a target person 206 is performed with attendance of an inspector 104", "a second inspection route where inspection for belongings and a body of a target person 206 is performed by him/herself without attendance of an inspector 104", and "a third inspection route where inspection for belongings of a target person 206 is performed by him/herself without attendance of an inspector 104" are prepared, and according to a result of a preliminary belongings inspection, the target person 206 can be guided to an appropriate route. Therefore, processing efficiency can be increased while detection accuracy of prohibited object carrying is maintained at a sufficient level.

### <Fifth Example Embodiment>

A route decision unit 13 according to the present example embodiment can decide, by using, in addition to a determination result of a preliminary belongings inspection based on a determination unit 12, another inspection result, an inspection route where a target person 206 proceeds. Hereinafter, detailed description is made.

According to the present example embodiment, in the preliminary belongings inspection, a belongings inspection using another device such as a metal sensor, and an odor sensor (hereinafter, referred to as "another detection device" in some cases) is performed. Then, a processing system 10 acquires a result of the inspection by using any means.

The route decision unit 13 decides an inspection route where the target person 206 proceeds, by using a determination result (a determination result based on the determination unit 12) of whether a prohibited object based on a signal of a reflection wave of an electromagnetic wave is carried and a belongings inspection result based on another detection device.

Herein, one example of a method of deciding, based on these pieces of information, an inspection route is described.

The route decision unit 13, for example, may determine a first inspection route when at least either of a matter that "it is determined that a prohibited object is carried in determination based on a signal of a reflection wave of an electromagnetic wave" and a matter that "another detection device detects a predetermined detection target" is satisfied, and may determine a second inspection route (or a third inspection route) when both of these matters are not satisfied. The above-described matter that "another detection device detects a predetermined detection target" includes, for example, a matter that "a metal sensor detects metal", a matter that "an odor sensor detects a predetermined material", and the like.

In addition, when it is determined whether a prohibited object is carried, based on a signal of a reflection wave, by using a method (machine learning, template matching, or the like) described according to the first example embodiment, for example, a degree of similarity between a feature value of belongings included in a signal to be processed and a feature value of a previously-specified prohibited object is computed, and when the degree of similarity is equal to or more than a first reference value, the belongings are determined as a prohibited object.

In this case, the route decision unit 13 may decide, according to whether a predetermined detection target is detected by another detection device, the first reference value with respect to each target person 206. When, for example, a predetermined detection target is detected by another detection device, the first reference value can be relatively lowered, and when a predetermined detection target is not detected by another detection device, the first reference value can be relatively raised.

Further, when a configuration according to the fourth example embodiment is employed, the route decision unit 13 may decide, similarly to the decision method for the first reference value, a second reference value described according to the fourth example embodiment.

Other configurations of the processing system 10 according to the present example embodiment are similar to the first to the fourth example embodiments.

As described above, according to the processing system 10 of the present example embodiment, an advantageous effect similar to the first to the fourth example embodiments is achieved.

Further, according to the present example embodiment, a preliminary belongings inspection using another detection device such as a metal sensor, and an odor sensor is performed, and by using a determination result (a determination result based on the determination unit 12) of whether a prohibited object based on a signal of a reflection wave of an electromagnetic wave is carried and a result based on another detection device, the target person 206 can be guided to an appropriate inspection route. Therefore, processing efficiency can be increased while detection accuracy of prohibited object carrying is maintained at a sufficient level.

### <Sixth Example Embodiment>

A route decision unit 13 according to the present example embodiment can decide, by using, in addition to a determination result of a preliminary belongings inspection based on a determination unit 12, customer information of a target person 206, an inspection route where the target person 206 proceeds. Hereinafter, detailed description is made.

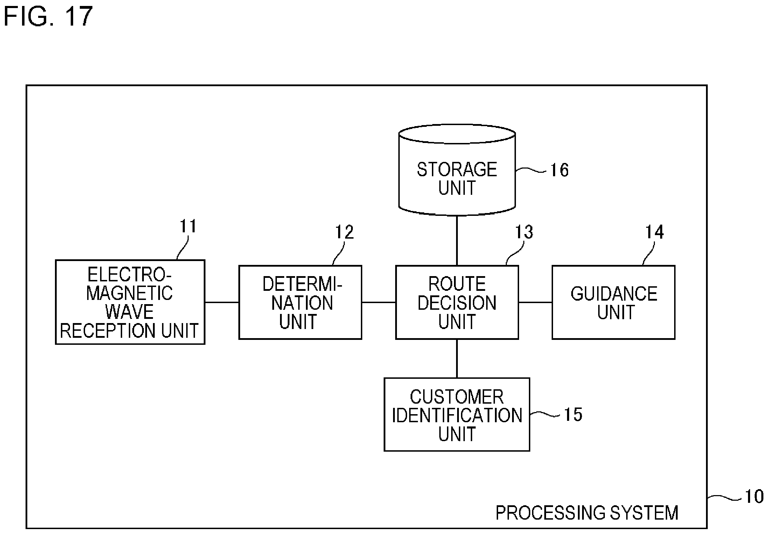

A processing system 10 according to the present example embodiment further includes a customer identification unit 15 and a storage unit 16, as illustrated in a function block diagram in Fig. 17.

The customer identification unit 15 acquires customer identification information of a target person 206. As the customer identification information, for example, biological information of the target person 206 is acquired, a previously-generated database (a database associating customer identification information with biological information) of biological information of a customer is referred to, and thereby customer identification information of the target person may be acquired. The biological information includes, but not limited to, for example, face information, fingerprint information, voiceprint information, iris information, and the like. The customer identification unit 15 can acquire biological information of the target person 206 via an input apparatus such as a camera, a fingerprint sensor, and a microphone.

In addition, the customer identification unit 15 performs short-range radio communication with a mobile device such as a smartphone, a smartwatch, a mobile phone, and an IC card carried by the target person 206, and thereby may acquire customer identification information stored in the mobile device.

In addition, the customer identification unit 15 reads, by using a code reader, a code (a bar code, a two-dimensional code, or the like) indicating customer identification information carried by the target person 206, and thereby may acquire customer identification information of the target person.

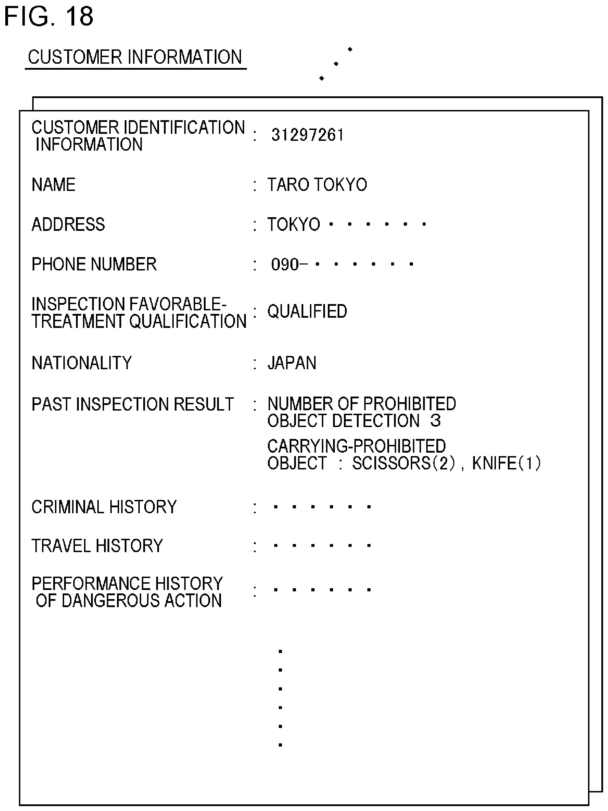

The storage unit 16 stores customer information relating to each of target persons 206 in association with each of a plurality of pieces of customer identification information. The customer information may include customer identification information, a name, and contact information (an address, a phone number, and the like). Further, the customer information may include at least one of a matter of whether a qualification for receiving favorable treatment in a belongings inspection is granted, a result of a past belongings inspection, nationality, a travel history, a criminal history, a performance history of a predetermined action, a matter of whether registration has been made in a whitelist, and a matter of whether registration has been made in a blacklist. Fig. 18 schematically illustrates one example of customer information.

A result of a past belongings inspection may include a result of all past inspections, or may include only a result of a part of last inspections (e.g., a predetermined last number of times, last several years, or the like). A result of a past belongings inspection indicates whether it is detected that, in a past belongings inspection, a prohibited object is carried. Further, a result of a past belongings inspection may further indicate information indicating a prohibited object detected as being carried in a past belongings inspection and the number of detections of carrying each prohibited object.

A predetermined action in a performance history of a predetermined action (dangerous action) affects determination of whether a belongings inspection is performed in detail and strictly, and includes, but not limited to, for example, contact with a terrorist organization and the like.

In a whitelist, a reliable customer, i.e., customer identification information of a customer for whom detailed or strict inspection is not required and self-inspection is actually sufficient is registered. A criterion for whether registration is made in a whitelist is a design matter. A person of a facility for performing a belongings inspection can generate a whitelist and register the generated whitelist in the storage unit 16.

In a blacklist, customer identification information of a customer for whom detailed and strict inspection is required. A criterion for whether registration is made in a blacklist is a design matter. A person of a facility for performing a belongings inspection can generate a blacklist and register the generated blacklist in the storage unit 16.

The route decision unit 13 decides an inspection route where the target person 206 proceeds, based on a determination result (a determination result based on the determination unit 12) of whether a prohibited object based on a signal of a reflection wave of an electromagnetic wave is carried and customer information of the target person 206. The route decision unit 13 may further decide an inspection route where the target person 206 proceeds, based on a result of a preliminary belongings inspection using another detection device such as a metal sensor, and an odor sensor described according to the fifth example embodiment.

The route decision unit 13 can decide an inspection route where the target person 206 proceeds, for example, based on at least either of whether customer information satisfies a preferential inspection criterion in which favorable treatment in inspection can be received and whether customer information satisfies a non-preferential inspection criterion in which favorable treatment in inspection is prohibited to receive.

A preferential inspection criterion may be any one of a matter that "the number of detections of prohibited object carrying in past belongings inspections is equal to or less than a first threshold", a matter that "a ratio of the number of detections of prohibited object carrying to the number of past belongings inspections is equal to or less than a second threshold", a matter that "registration has been made in a whitelist", a matter that "registration has not been made in a blacklist", a matter that "there is no criminal history", a matter that "there is no performance history of the above-described predetermined action", a matter that "there is no travel history to a specified area", and a matter that "nationality is not specified nationality". Alternatively, a preferential inspection criterion may be defined by a conditional expression in which some or all of a plurality of conditions exemplified above are connected by a logical operator.

A non-preferential inspection criterion may be any one of a matter that "the number of detections of prohibited object carrying in past belongings inspections is equal to or more than a third threshold", a matter that "a ratio of the number of detections of prohibited object carrying to the number of past belongings inspections is equal to or more than a fourth threshold", a matter that "registration has not been made in a whitelist", a matter that "registration has been made in a blacklist", a matter that "there is a criminal history", a matter that "there is a performance history of the above-described predetermined action", a matter that "there is a travel history to a specified area", and a matter that "nationality is specified nationality". Alternatively, a non-preferential inspection criterion may be defined by a conditional expression in which some or all of a plurality of conditions exemplified above are connected by a logical operator.

Herein, one example of a method of deciding, based on these pieces of information, an inspection route is described.

The route decision unit 13, for example, may decide a first inspection route when at least one of a matter that "it is determined that a prohibited object is carried in determination based on a signal of a reflection wave of an electromagnetic wave", a matter that "a preferential inspection criterion is not satisfied", and a matter that "a non-preferential inspection criterion is satisfied" is satisfied, and decide a second inspection route (or third inspection route) when any of the above matters is not satisfied.

Further, the route decision unit 13 may decide the first inspection route when at least one of a matter that "it is determined that a prohibited object is carried in determination based on a signal of a reflection wave of an electromagnetic wave", a matter that "a preferential inspection criterion is not satisfied", a matter that "a non-preferential inspection criterion is satisfied", and a matter that "a predetermined detection target is detected in a preliminary belongings inspection based on another detection device" is satisfied, and decide the second inspection route (or third inspection route) when any of the above matters is not satisfied. The above-described matter that "a predetermined detection target is detected in a preliminary belongings inspection based on another detection device" includes, for example, a matter that "metal is detected by a metal sensor", a matter that "a predetermined material is detected by an odor sensor", and the like.

In addition, when it is determined whether a prohibited object is carried, based on a signal of a reflection wave, by using a method (machine learning, template matching, or the like) described according to the first example embodiment, for example, a degree of similarity between a feature value of belongings included in a signal to be processed and a feature value of a previously-registered prohibited object is computed, and when the degree of similarity is equal to or more than a first reference value, the belongings are determined as a prohibited object.

In this case, the route decision unit 13 may decide a first reference value with respect to each target person 206 according to at least either of a matter that "a preferential inspection criterion is satisfied" and a matter that "a non-preferential inspection criterion is satisfied". When, for example, "a preferential inspection criterion is not satisfied", the first reference value can be relatively lowered. Further, when "a preferential inspection criterion is satisfied", the first reference value can be relatively raised. Further, when "a non-preferential inspection criterion is not satisfied", the first reference value can be relatively raised. Further, when "a non-preferential inspection criterion is satisfied", the first reference value can be relatively lowered.

Further, the route decision unit 13 may decide the first reference value according to a matter of "whether a predetermined detection target is detected in a preliminary belongings inspection based on another detection device". Details of the determination are as described according to the fifth example embodiment.

Further, when a configuration according to the fourth example embodiment is operated, the route decision unit 13 may decide, similarly to the decision method for the first reference value, a second reference value described according to the fourth example embodiment.

In addition, the route decision unit 13 may compute an evaluation value with respect to each target person 206, based on a parameter value such as a matter of "whether it is determined that a prohibited object is carried in determination based on a signal of a reflection wave of an electromagnetic wave", "a type of a prohibited object determined as being carried", "a degree of similarity between a feature value of belongings included in a signal to be processed and a feature value of a previously-registered prohibited object", a matter of "whether registration has been made in a whitelist", a matter of "whether registration has been made in a blacklist", "the number of detections of prohibited object carrying in past belongings inspections", "a ratio of the number of detections of prohibited object carrying to the number of past belongings inspections", "a type of a crime included in a criminal history", "a type of a predetermined action included in a performance history of the above-described predetermined action", "a specified area having a travel history", or "nationality". Then, the route decision unit 13 may decide, based on comparison between an evaluation value and a threshold, an inspection route where a target person proceeds. According to the present example embodiment, it is important to compute an evaluation value from a parameter value as described above, and therefore a detailed algorithm for computing the evaluation value is not specifically limited.

Other configurations of the processing system 10 according to the present example embodiment are similar to the first to the fifth example embodiments.

As described above, according to the processing system 10 of the present example embodiment, an advantageous effect similar to the first to the fifth example embodiments is achieved.

Further, according to the present example embodiment, by using a determination result (a determination result based on the determination unit 12) of whether a prohibited object based on a signal of a reflection wave of an electromagnetic wave is carried and customer information of a target person 206, the target person 206 can be guided to an appropriate inspection route. Therefore, processing efficiency can be increased while detection accuracy of prohibited object carrying is maintained at a sufficient level.

### <Seventh Example Embodiment>

A processing system 10 according to the present example embodiment provides a result of a preliminary belongings inspection to a self-inspection apparatus 103 as described above, performs inspection, in a body self-inspection described above, by using the result of the preliminary belongings inspection, and thereby achieves reduction of a processing load on the self-inspection apparatus 103 and improvement of prohibited object detection accuracy. Hereinafter, detailed description is made.

The self-inspection apparatus 103 irradiates, as described according to the above-described example embodiments, a target person 206 being subjected to inspection (belongings inspection) of a second inspection route with an electromagnetic wave, receives a reflection wave, and performs, based on a signal of the reflection wave, a body inspection for determining whether the target person 206 carries a prohibited object.

Then, an object detection criterion for the body inspection is determined in a plurality of stages, and thereby the self-inspection apparatus 103 can decide an inspection criterion according to a result of a preliminary belongings inspection based on the processing system 10. In the preliminary belongings inspection based on the processing system 10, when, for example, a determination unit 12 determines that the target person 206 carries a prohibited object, the self-inspection apparatus 103 sets a relatively-strict object inspection criterion from among object detection criteria of a plurality of stages, and thereby may determine whether the target person 206 carries a prohibited object. On the other hand, in the preliminary belongings inspection, when the determination unit 12 determines that the target person 206 does not carry a prohibited object, the self-inspection apparatus 103 sets a relatively-simple object inspection criterion from among object detection criteria of a plurality of stages, and thereby may determine whether the target person 206 carries a prohibited object.

Further, the self-inspection apparatus 103 determines, in the body inspection, whether a prohibited object is present in a portion (hereinafter, referred to as a "target portion") where an object is detected in determination (preliminary belongings inspection) based on the determination unit 12 in a body of the target person 206. The self-inspection apparatus 103 may determine whether the target person 206 carries a prohibited object, for example, by using only a part, including a target portion, of an image generated based on a signal of a reflection wave.

The target portion may be a part of a body, and various manners for determination are employable. A target portion may be determined, for example, in such a way as to be an upper body, a lower body, or the like, or a target portion may be determined, based on a finer unit, in such a way as to be a right-foot portion, a left-foot portion, a right-arm portion, a left-arm portion, a body portion, a head portion, or the like.

Other configurations of the processing system 10 according to the present example embodiment are similar to the first to the sixth example embodiments.

As described above, according to the processing system 10 of the present example embodiment, an advantageous effect similar to the first to the sixth example embodiments is achieved. Further, when it is determined whether a target person 206 carries a prohibited object by using only a part, including a target portion, in an image generated based on a signal of a reflection wave, a data amount to be processed can be decreased, and in addition, improvement of detection accuracy and the like are achieved by narrowing down data.

### <Modified Example>

Herein, a modified example applicable to all example embodiments is described. According to the above-described example embodiments, an electromagnetic wave reception unit 11 irradiates a target person 206 with an electromagnetic wave (e.g., a microwave, a milliwave, a terahertz wave, or the like) having a wavelength of equal to or more than 30 micrometers and equal to or less than one meter, and receives a reflection wave. As a modified example, the electromagnetic wave reception unit 11 receives, without irradiation of an electromagnetic wave, an electromagnetic wave emitted from the target person 206 and belongings themselves, and thereby may achieve "reception of an electromagnetic wave from the target person 206 (including belongings). Further, also in a body inspection and a belongings inspection performed in a first to a third inspection routes described above, instead of a configuration in which an electromagnetic wave is irradiated and a reflection wave is received, a configuration in which an electromagnetic wave emitted from the target person 206 and belongings themselves is received and inspection is performed based on the received electromagnetic wave may be made. Also, according to the modified example, an advantageous effect similar to the example embodiments is achieved.

While the invention of the present application has been particularly described with reference to example embodiments (and examples) thereof, the invention of the present application is not limited to these example embodiments (and examples). It will be understood by those of ordinary skill in the art that various changes in form and details may be made therein without departing from the spirit and scope of the invention of the present application as defined by the claims.

The whole or a part of the example embodiments described above can be described as, but not limited to, the following supplementary notes.
1. A processing system including:
   an electromagnetic wave reception means for receiving an electromagnetic wave from a target person passing through a predetermined region;
   a determination means for determining, based on a signal of the received electromagnetic wave, whether the target person carries a previously-specified object;
   a route decision means for deciding, based on a result of the determination, an inspection route where the target person proceeds from among a plurality of the previously-determined inspection routes; and
   a guidance means for executing guidance processing of guiding the target person to the decided inspection route.
2. The processing system according to supplementary note 1, wherein
   the plurality of inspection routes include a first inspection route for performing, with attendance of an inspector, inspection for belongings and a body, and a second inspection route for performing, without attendance of an inspector, inspection for at least either of belongings and a body, and
   the route decision means
      decides, when it is determined that the target person carries the specified object, the first inspection route as the inspection route where the target person proceeds, and
      decides, when it is determined that the target person does not carry the specified object, the second inspection route as the inspection route where the target person proceeds.
3. The processing system according to supplementary note 1, wherein
   the plurality of inspection routes include a first inspection route for performing, with attendance of an inspector, inspection for belongings and a body, a second inspection route for performing, without attendance of an inspector, inspection for belongings and a body, and a third inspection route for performing, without attendance of an inspector, inspection for belongings, and
   the route decision means
      decides, when it is determined that the target person carries the specified object, the first inspection route as the inspection route where the target person proceeds, and
      decides, when it is determined that the target person does not carry the specified object, the second inspection route or the third inspection route as the inspection route where the target person proceeds.
4. The processing system according to supplementary note 2 or 3, further including
   receiving an electromagnetic wave from the target person being subjected to inspection in the second inspection route, and performing, based on a signal of the received electromagnetic wave, inspection of whether the specified object is present in a portion, where an object is detected in determination based on the determination means, in a body of the target person.
5. The processing system according to any one of supplementary notes 1 or 4, further including:
   a customer identification means for acquiring customer identification information of the target person; and
   a storage means for storing customer information relating to each of the target persons in association with each of a plurality of pieces of the customer identification information, wherein
   the route decision means decides, based on a result of the determination and the customer information of the target person, the inspection route where the target person proceeds.
6. The processing system according to supplementary note 5, wherein
   the customer information includes at least one of a matter of whether a qualification for receiving favorable treatment in inspection is granted, a past inspection result, nationality, a travel history, a criminal history, a performance history of a predetermined action, a matter of whether registration has been made in a whitelist, and a matter of whether registration has been made in a blacklist, and
   the route decision means decides the inspection route where the target person proceeds, based on at least either of a matter of whether the customer information satisfies a preferential inspection criterion in which favorable treatment in inspection can be received and a matter of whether the customer information satisfies a non-preferential inspection criterion in which favorable treatment in inspection is prohibited to receive.
7. The processing system according to supplementary note 6, wherein
   the past inspection result indicates whether it has been detected that the specified object is carried in a past inspection, and
   the preferential inspection criterion includes at least either of a matter that the number of detections of carrying of the specified object in past inspections is equal to or less than a first threshold and a matter that a ratio of the number of detections of carrying of the specified object to the number of past inspections is equal to or less than a second threshold.
8. The processing system according to supplementary note 6, wherein
   the past inspection result indicates whether it has been detected that the specified object is carried in a past inspection, and
   the non-preferential inspection criterion includes at least either of a matter that the number of detections of carrying of the specified object in past inspections is equal to or more than a third threshold and a matter that a ratio of the number of detections of carrying of the specified object to the number of past inspections is equal to or more than a fourth threshold.
9. The processing system according to any one of supplementary notes 5 to 8, wherein
   the determination means
   generates, based on a signal of the received electromagnetic wave, a transmission image, and decides, based on whether a degree of similarity between a shape of an object captured in the transmission image and a shape of the specified object exceeds a threshold, whether an object captured in the transmission image is determined as the specified object, and
   modifies, based on the customer information, the threshold with respect to the each target person.
10. A processing method including:
   by a processing system,
   receiving an electromagnetic wave from a target person passing through a predetermined region;
   determining, based on a signal of the received electromagnetic wave, whether the target person carries a previously-specified object;
   deciding, based on a result of the determination, an inspection route where the target person proceeds from among a plurality of the previously-determined inspection routes; and
   executing guidance processing of guiding the target person to the decided inspection route.
11. A program causing a computer to function as:
   an electromagnetic wave reception means for receiving an electromagnetic wave from a target person passing through a predetermined region;
   a determination means for determining, based on a signal of the received electromagnetic wave, whether the target person carries a previously-specified object;
   a route decision means for deciding, based on a result of the determination, an inspection route where the target person proceeds from among a plurality of the previously-determined inspection routes; and
   a guidance means for executing guidance processing of guiding the target person to the decided inspection route.

## Claims

1. A processing system comprising:
electromagnetic wave reception means for receiving an electromagnetic wave from a target person passing through a predetermined region;
determination means for determining, based on a signal of the received electromagnetic wave, whether the target person carries a previously-specified object;
route decision means for deciding, based on a result of the determination, an inspection route where the target person proceeds from among a plurality of the previously-determined inspection routes; and
guidance means for executing guidance processing of guiding the target person to the decided inspection route.

2. The processing system according to claim 1, wherein
the plurality of inspection routes include a first inspection route for performing, with attendance of an inspector, inspection for belongings and a body, and a second inspection route for performing, without attendance of an inspector, inspection for at least either of belongings and a body, and
the route decision means
decides, when it is determined that the target person carries the specified object, the first inspection route as the inspection route where the target person proceeds, and
decides, when it is determined that the target person does not carry the specified object, the second inspection route as the inspection route where the target person proceeds.

3. The processing system according to claim 1, wherein
the plurality of inspection routes include a first inspection route for performing, with attendance of an inspector, inspection for belongings and a body, a second inspection route for performing, without attendance of an inspector, inspection for belongings and a body, and a third inspection route for performing, without attendance of an inspector, inspection for belongings, and
the route decision means
decides, when it is determined that the target person carries the specified object, the first inspection route as the inspection route where the target person proceeds, and
decides, when it is determined that the target person does not carry the specified object, the second inspection route or the third inspection route as the inspection route where the target person proceeds.

4. The processing system according to claim 2 or 3, further comprising
receiving an electromagnetic wave from the target person being subjected to inspection in the second inspection route, and performing, based on a signal of the received electromagnetic wave, inspection of whether the specified object is present in a portion, where an object is detected in determination based on the determination means, in a body of the target person.

5. The processing system according to any one of claims 1 or 4, further comprising:
customer identification means for acquiring customer identification information of the target person; and
storage means for storing customer information relating to each of the target persons in association with each of a plurality of pieces of the customer identification information, wherein
the route decision means decides, based on a result of the determination and the customer information of the target person, the inspection route where the target person proceeds.

6. The processing system according to claim 5, wherein
the customer information includes at least one of a matter of whether a qualification for receiving favorable treatment in inspection is granted, a past inspection result, nationality, a travel history, a criminal history, a performance history of a predetermined action, a matter of whether registration has been made in a whitelist, and a matter of whether registration has been made in a blacklist, and
the route decision means decides the inspection route where the target person proceeds, based on at least either of a matter of whether the customer information satisfies a preferential inspection criterion in which favorable treatment in inspection can be received and a matter of whether the customer information satisfies a non-preferential inspection criterion in which favorable treatment in inspection is prohibited to receive.

7. The processing system according to claim 6, wherein
the past inspection result indicates whether it has been detected that the specified object is carried in a past inspection, and
the preferential inspection criterion includes at least either of a matter that a number of detections of carrying of the specified object in past inspections is equal to or less than a first threshold and a matter that a ratio of a number of detections of carrying of the specified object to a number of past inspections is equal to or less than a second threshold.

8. The processing system according to claim 6, wherein
the past inspection result indicates whether it has been detected that the specified object is carried in a past inspection, and
the non-preferential inspection criterion includes at least either of a matter that a number of detections of carrying of the specified object in past inspections is equal to or more than a third threshold and a matter that a ratio of a number of detections of carrying of the specified object to a number of past inspections is equal to or more than a fourth threshold.

9. The processing system according to any one of claims 5 to 8, wherein
the determination means
generates, based on a signal of the received electromagnetic wave, a transmission image, and decides, based on whether a degree of similarity between a shape of an object captured in the transmission image and a shape of the specified object exceeds a threshold, whether an object captured in the transmission image is determined as the specified object, and
modifies, based on the customer information, the threshold with respect to the each target person.

10. A processing method comprising:
by a processing system,
receiving an electromagnetic wave from a target person passing through a predetermined region;
determining, based on a signal of the received electromagnetic wave, whether the target person carries a previously-specified object;
deciding, based on a result of the determination, an inspection route where the target person proceeds from among a plurality of the previously-determined inspection routes; and
executing guidance processing of guiding the target person to the decided inspection route.

11. A program causing a computer to function as:
electromagnetic wave reception means for receiving an electromagnetic wave from a target person passing through a predetermined region;
determination means for determining, based on a signal of the received electromagnetic wave, whether the target person carries a previously-specified object;
route decision means for deciding, based on a result of the determination, an inspection route where the target person proceeds from among a plurality of the previously-determined inspection routes; and
guidance means for executing guidance processing of guiding the target person to the decided inspection route.
